# FASCICULE DE BREVET EUROPEEN

(11) **EP 3 617 452 B1**
(45) Date de publication et mention de la délivrance du brevet: **19.05.2021**
(21) Numéro de dépôt: 19193884.4
(22) Date de dépôt: 27.08.2019
(51) Int. Cl.: F01D 5/06

(54) **ACCOUPLEMENT POUR TURBOMACHINE, TURBINE ET TURBOMACHINE ASSOCIÉES**
KUPPLUNG FÜR STRÖMUNGSMASCHINE, ZUGEHÖRIGE TURBINE UND STRÖMUNGSMASCHINE
COUPLING FOR TURBOMACHINE, CORRESPONDING TURBINE AND TURBOMACHINE

(30) Priorité: 29.08.2018 FR 1857740
(43) Date de publication de la demande: 04.03.2020
(73) Titulaire: SAFRAN AIRCRAFT ENGINES, 75015 Paris (FR)
(72) Inventeur: LAROCHE, Clément Raphaël, 77550 MOISSY-CRAMAYEL (FR)
(74) Mandataire: Brevalex

(56) Documents cités:
- DE-A1-102014 225 975
- FR-A- 902 004
- KR-B1- 101 842 798
- US-A- 2 672 013
- US-A1- 2015 322 961

## Description

### DOMAINE TECHNIQUE

L'invention concerne le couplage de deux éléments rotatifs tels que des disques portant des aubages dans un moteur de turbomachine ou analogue comme un turboréacteur, au moyen d'une liaison de type « *curvic ».*

### ÉTAT DE LA TECHNIQUE ANTÉRIEURE

Dans un tel moteur, l'air extérieur est admis dans une manche d'entrée pour traverser une soufflante comportant une série de pales rotatives avant de se scinder en un flux primaire central et un flux secondaire entourant le flux primaire.

Le flux primaire traverse ensuite un compresseur haute pression avant d'arriver dans une chambre de combustion, après quoi il se détend en traversant successivement une turbine haute pression et une turbine basse pression avant d'être évacué en générant après récupération d'énergie pour l'entrainement de la soufflante et en générant de la poussée. Le flux secondaire est quant à lui propulsé directement vers l'arrière par la soufflante pour générer lui aussi une poussée.

Pour permettre la récupération d'énergie, la turbine haute pression est liée en rotation avec le compresseur haute pression pour l'entraîner en rotation, et la soufflante est liée en rotation avec la turbine basse pression par laquelle elle est entraînée en rotation, l'essentiel de la poussée étant généré par la soufflante.

Les parties de compresseur ou de turbines d'un tel moteur comportent le plus souvent plusieurs étages formés par des éléments rotatifs solidarisés en rotation les uns aux autres pour tourner autour d'un axe de rotation AX du moteur.

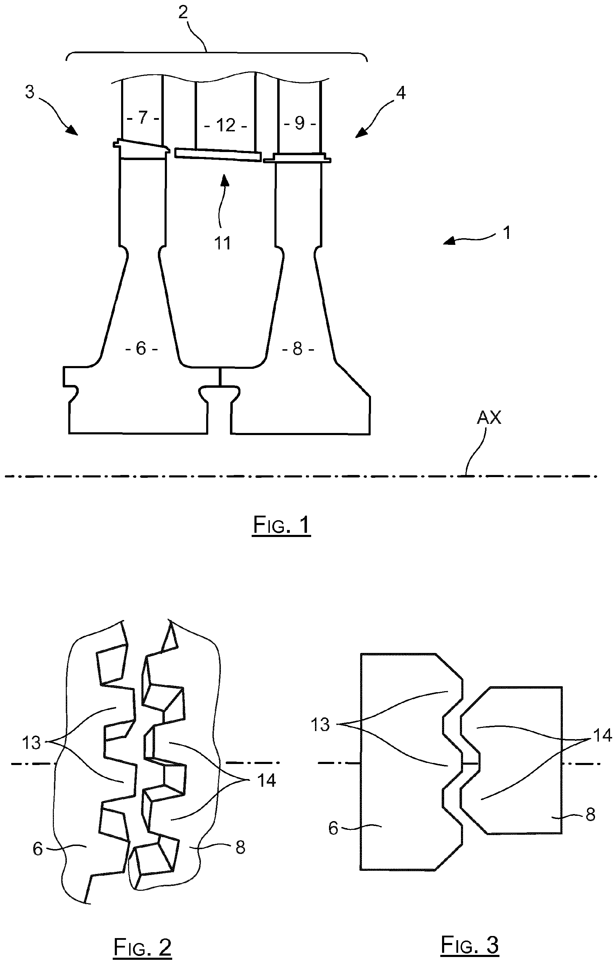

Dans ce cadre, la figure 1 montre une turbine haute pression 1 comprenant une partie 2 incluant un premier étage 3 et un deuxième étage 4 en aval du premier étage par rapport au sens de circulation du flux. Le premier étage 3 comporte un premier disque 6 portant une première série d'aubes 7, le deuxième étage comportant un deuxième disque 8 portant une deuxième série d'aubes 9. Un distributeur 11 formé d'une série d'aubes fixes 12 est interposé entre la première série d'aubes mobiles et la deuxième série d'aubes mobiles. Chaque disque comprend une ouverture centrale et porte des aubes à sa périphérie externe.

Comme visible sur cette figure 1, le premier disque 6 est accolé au deuxième disque 8 le long de l'axe AX, et il est accouplé en rotation à ce premier disque par une liaison de type « *curvic coupling* », encore appelée crabot ou liaison à denture trapézoïdale.

La liaison des deux disques qui apparaît plus clairement sur les figures 2 et 3 comporte des premières dents trapézoïdales 13 portées par le premier disque 6 qui sont orientées vers le deuxième disque 8, et des deuxièmes dents trapézoïdales 14 portées par le second disque en étant orientées vers le premier disque 6.

Dans le cas des figures 2 et 3, le premier et le deuxième disque sont désaccouplés en étant espacés l'un de l'autre, ce qui permet de faire apparaître leurs dentures. Lorsque l'agencement est en service comme dans le cas de la figure 1, les disques sont accouplés du fait qu'ils sont appliqués l'un contre l'autre, les premières dents étant engagées avec les deuxièmes dents selon un assemblage de type créneau-mortaise permettant de transférer un couple d'un disque vers l'autre.

Le choix d'un accouplement par liaison curvic permet notamment aux disques de se centrer indépendamment l'un de l'autre autour de l'axe de rotation en cours de fonctionnement, tout en transférant efficacement un couple d'un disque vers l'autre. Ce couplage permet également de faciliter l'assemblage et le désassemblage du rotor dont font partie les disques qui le composent tout en ayant un encombrement limité.

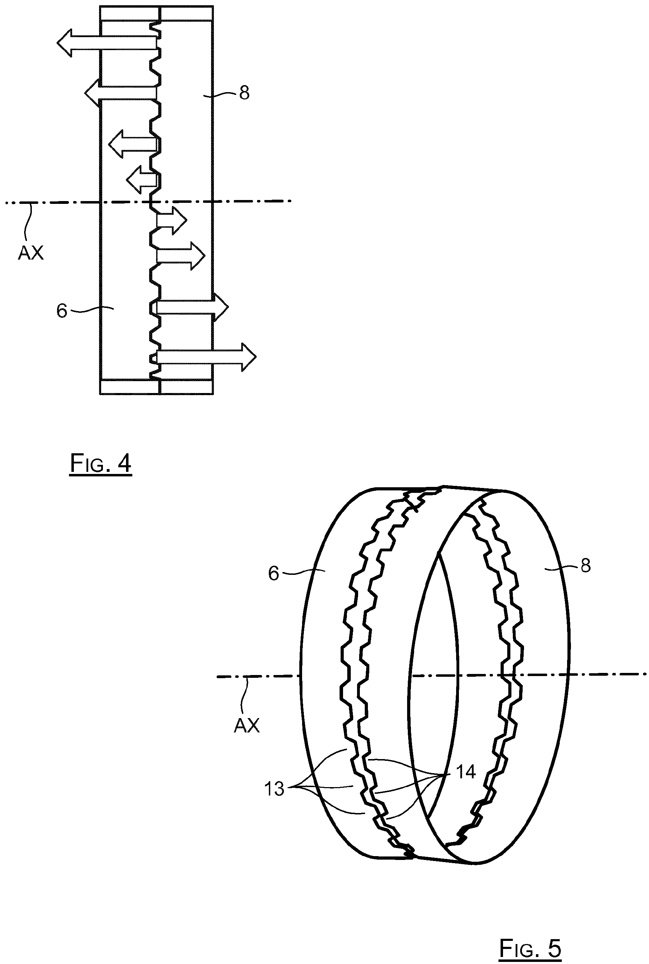

Néanmoins, si l'un des disques perd l'une des aubes qu'il porte, les efforts axiaux auxquels il est soumis deviennent déséquilibrés, comme illustré schématiquement sur la figure 4. En pratique, le disque ayant perdu une ou plusieurs aubes tend alors à s'incliner par rapport à son orientation nominale, ce qui peut conduire à un désaccouplement des deux disques, illustré sur la figure 5. En cas de désaccouplement, le disque peut entrer dans un état de survitesse pouvant conduire à son explosion et/ou sa sortie du moteur.

L'art antérieur selon le préambule de la revendication 1 est connu de DE102014225975A1, US2015/322961A1, FR902004A, ou US2672013A. Le but de l'invention est d'apporter une solution permettant d'éviter le désaccouplement d'une liaison interdisque de type curvic, notamment en cas de perte d'une aube.

### EXPOSÉ DE L'INVENTION

A cet effet, l'invention a pour objet un accouplement pour turbomachine entre un premier élément et un deuxième élément qui s'étendent autour d'un axe en étant engagés l'un avec l'autre le long de l'axe, chaque élément comprenant des dents qui s'étendent axialement pour être engagées axialement dans une concavité respective de l'autre élément, caractérisé en ce qu'il comporte au moins un organe de blocage qui coopère avec des premiers moyens de blocage portés chacun par une dent du premier élément et avec des deuxièmes moyens de blocage portés chacun par une dent du deuxième élément pour bloquer axialement le premier élément par rapport au deuxième élément.

Avec cette solution, le désaccouplement des premier et deuxième éléments est empêché dans la direction axiale, ce qui est notamment efficace pour éviter des phénomènes de survitesse pouvant conduire à l'endommagement du rotor de la turbomachine en cas de séparation entre ces deux éléments en fonctionnement. De plus, l'encombrement des moyens de blocage est limité par le fait qu'ils sont au plus près des dentures d'accouplement.

L'invention a également pour objet un accouplement ainsi défini, dans lequel :
- plusieurs dents du premier élément comportent chacune une première face de rétention;
- plusieurs dents du deuxième élément comportent chacune une deuxième face de rétention;
- l'au moins un organe de blocage s'étendant entre les premières et les deuxièmes faces de rétention pour bloquer axialement le premier élément par rapport au deuxième élément.

L'invention a également pour objet un accouplement ainsi défini, dans lequel les premières faces de rétention et les deuxièmes faces de rétention sont plans et en contact avec l'organe e blocage. L'invention a également pour objet un accouplement ainsi défini, dans lequel chaque face de rétention est formée par une protubérance prolongeant une dent, et dans lequel chaque protubérance a une forme rectiligne d'orientation radiale dirigée vers l'axe.

L'invention a également pour objet un accouplement ainsi défini, dans lequel l'organe de blocage est un anneau fendu.

L'invention a également pour objet un accouplement ainsi défini, dans lequel certaines premières et deuxièmes dents sont dépourvues de protubérance.

L'invention a également pour objet un accouplement ainsi défini, dans lequel l'organe de blocage comprend un fond cylindrique prolongé extérieurement par une nervure s'engageant entre les premières et deuxièmes faces de rétention.

L'invention a également pour objet un accouplement ainsi défini, dans lequel le fond cylindrique de l'organe de blocage est prolongé axialement par un premier et par un deuxième flanc qui sont axialement prolongés respectivement par un premier et par un deuxième rebord cylindrique, ce premier et ce deuxième rebord cylindrique se plaquant respectivement contre une première et contre une deuxième face interne cylindrique respectivement du premier et du deuxième élément.

L'invention a également pour objet un accouplement ainsi défini, dans lequel les rebords cylindriques portent chacun un joint d'étanchéité annulaire.

L'invention a également pour objet une turbine comprenant un accouplement ainsi défini.

L'invention a également pour objet une turbomachine comprenant une turbine ainsi définie.

### BRÈVE DESCRIPTION DES DESSINS

La figure 1 déjà décrite est une vue en coupe d'une portion de turbine haute pression connue ;
La figure 2 déjà décrite est une vue en perspective d'une portion de liaison de type curvic connue ;
La figure 3 déjà décrite est une vue schématique à plat d'une portion de liaison de type curvic connue ;
La figure 4 déjà décrite est une vue latérale montrant un déséquilibre de répartition d'efforts dans une liaison curvic connue en cas de perte d'une aube ;
La figure 5 déjà décrite est une vue en perspective montrant un désaccouplement de liaison curvic connue ;
La figure 6 est une vue schématique à plat d'une portion de liaison curvic selon l'invention ;
La figure 7 est une vue schématique en coupe d'une liaison curvic selon l'invention ;
La figure 8 est une vue en perspective d'une portion de liaison curvic selon l'invention ;
La figure 9 est une vue en perspective d'une portion de deuxième denture de la liaison selon l'invention ;
La figure 10 est une vue en perspective d'une moitié de liaison curvic selon l'invention ;
La figure 11 est une vue en perspective d'une portion de première denture de la liaison selon l'invention avec une variante d'organe de blocage ;
La figure 12 est une vue partielle en section de la liaison selon l'invention montrant la section de la variante d'organe de blocage ;
La figure 13 est une vue en section de la variante d'organe représenté seul.

### EXPOSÉ DÉTAILLÉ DE MODES DE RÉALISATION PARTICULIERS

L'idée à la base de l'invention est de tirer parti du chevauchement alterné des dentures de la liaison curvic pour maintenir un organe de blocage annulaire par des excroissances dépassant des dents radialement vers l'axe.

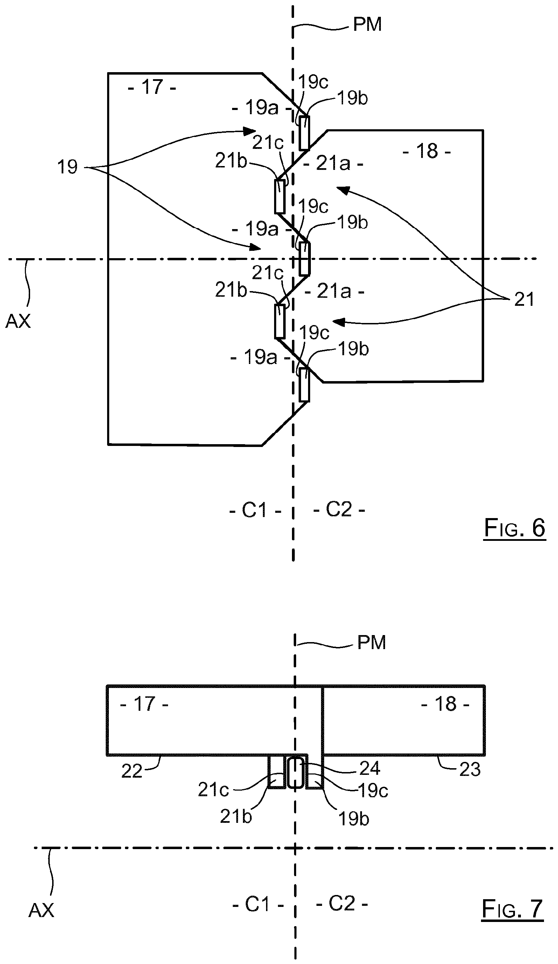

Sur la figure 6, une vue schématique à plat d'une portion d'une liaison 16 de type curvic selon l'invention assure l'accouplement d'un premier disque 17 avec un deuxième disque 18 qui tournent autour d'un axe AX en étant accolés l'un à l'autre le long de cet axe.

Le premier disque 17 porte à l'une de ses faces une première denture s'étendant selon une couronne centrée sur l'axe AX, cette première denture étant formée par des premières dents 19 trapézoïdales régulièrement espacées qui sont orientées vers le deuxième disque 18.

Le deuxième disque 18 porte à l'une de ses faces une denture s'étendant selon une couronne centrée sur l'axe AX, cette deuxième denture étant formée par des deuxièmes dents 21 trapézoïdales régulièrement espacées et orientées vers le premier disque 17.

Chaque dent 19 du premier disque 17 comporte un profil principal trapézoïdal 19a orienté axialement et dirigé vers le deuxième disque, et une protubérance 19b qui dépasse d'une extrémité de ce profil principal 19a en s'étendant vers l'axe AX. De la même manière, chaque dent 21 du deuxième disque 18 comporte un profil principal trapézoïdal 21a orienté axialement et dirigé vers le premier disque, et une protubérance 21b qui dépasse d'une extrémité de ce profilé principal en s'étendant vers l'axe AX.

L'accouplement en rotation du premier disque 17 avec le deuxième disque 18 est assuré par emboîtement des profils principaux 19a, 21a les uns avec les autres qui constituent les dents proprement dites, et par l'intermédiaire desquels un couple est transféré d'un disque vers l'autre lorsque l'ensemble est en service. Chaque dent est ainsi engagée dans une concavité délimitée par l'intervalle séparant deux dents consécutives de l'autre disque.

Chaque première protubérance 19b définit un profil trapézoïdal 19a d'une première dent 19 appartenant au premier disque et qui est orientée vers l'axe AX, une face interne cylindrique 22 étant commune aux premières dents 19. De manière analogue, chaque deuxième protubérance 21b définit un profil trapézoïdal 21a d'une deuxième dent 21 appartenant au deuxième disque et qui est orientée vers l'axe AX, une face interne cylindrique 23 étant commune aux deuxièmes dents 21.

Comme visible sur les figures 6 et 7, chaque première protubérance 19b forme une première face de rétention 19c plane et normale à l'axe AX tournée vers le premier disque 17, et de façon analogue chaque deuxième protubérance 21b forme une deuxième face de rétention 21c plane et normale à l'axe AX tournée vers le deuxième disque 18.

Les premières faces de rétention 19c et les deuxièmes faces de rétention 21c sont disposées de façon alternée de part et d'autre d'un plan médian PM normal à l'axe AX. Ce plan médian PM correspond au plan moyen de l'accouplement : le premier disque 17 est situé essentiellement d'un premier côté C1 du plan PM, et le deuxième disque est situé essentiellement d'un deuxième côté C2 du plan PM, opposé au premier. Les faces 19c s'étendent toutes dans une région située du deuxième côté C2 et les faces 21c s'étendent toutes dans une région située du premier côté C1.

Les premiers profils trapézoïdaux traversent le plan médian PM, de sorte que les premières faces de rétention 19c s'étendent du deuxième côté C2. Et de manière analogue, les deuxièmes profils trapézoïdaux 21a traversent le plan médian PM, de sorte que les deuxièmes faces de rétention 21c s'étendent du premier côté C1.

Les premières faces de rétention 19c sont espacées des deuxièmes faces de rétention 21c le long de l'axe AX, de manière à délimiter entre elles une rainure circonférentielle dont le fond est constitué par les faces internes cylindriques 22 et 23. Cette rainure reçoit un organe de blocage 24 qui, dans l'exemple des figures, est un jonc annulaire permettant de verrouiller la liaison.

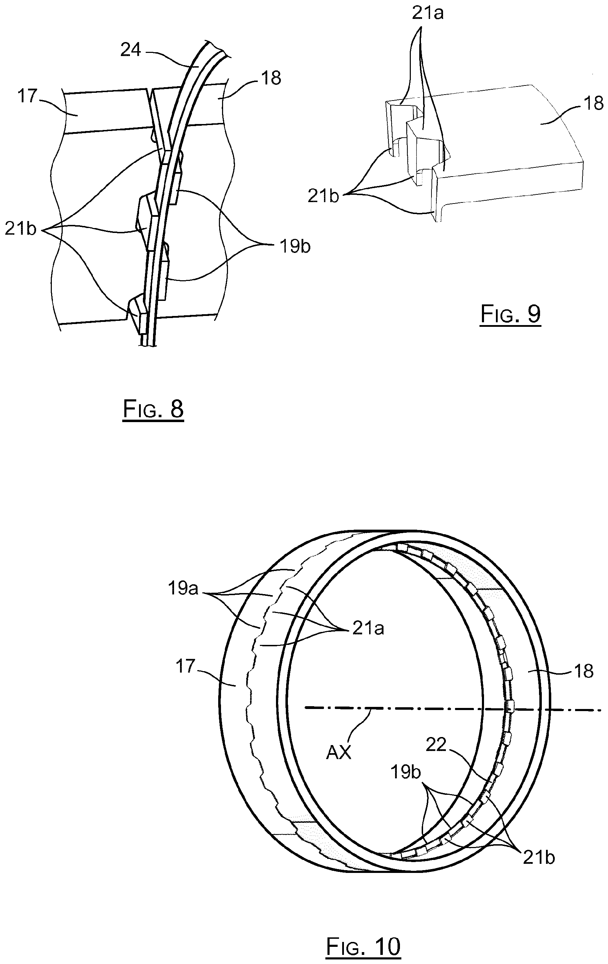

Comme visible notamment sur les figures 8 et 9, chaque première protubérance 19b a une forme rectiligne et s'étend radialement vers l'axe AX, et de manière analogue chaque deuxième protubérance 21b a une forme rectiligne et s'étend radialement vers l'axe AX.

Lorsque l'ensemble est monté comme sur les figures 8 et 10, le jonc 24 s'étend entre les premières et les deuxièmes protubérances disposées en quinconces. Le jonc 24 est ainsi interposé axialement entre les premières faces de rétention 19c et les deuxièmes faces de rétention 21c pour les bloquer les unes par rapport aux autres le long de l'axe AX, en formant avec celles-ci un verrouillage s'opposant à tout écartement du premier disque par rapport au deuxième disque.

Le jonc 24 est également bloqué radialement : d'une part par les faces internes 22 et 23 contre lesquelles il est en appui et qui s'opposent à son expansion radiale par effet centrifuge.

L'ensemble constitué par le jonc 24 et les protubérances 19b, 21b forme ainsi un verrouillage stable de la liaison curvic qui interdit le désengagement axial de celle-ci, tout en étant démontable par exemple pour une opération de maintenance du moteur ou encore pour son montage.

Dans l'exemple des figures, chaque dent est pourvue d'une protubérance, mais seulement une partie des dents peuvent être pourvues de telles protubérances, par exemple une dent sur deux ou une dent sur trois. En pratique, la liaison comporte un minimum de trois premières protubérances prolongeant trois premières dents et de trois deuxièmes protubérances prolongeant trois deuxièmes dents.

Une fois que le premier disque 17 a été rapporté contre le deuxième disque 18, pour engager la première denture avec la deuxième denture, un opérateur engage une extrémité du jonc 24 dans la rainure annulaire délimitée par les protubérances 19b, 21b, et il pousse ce jonc radialement dans cette rainure jusqu'à ce qu'il y soit intégralement logé.

L'organe de blocage 24 a ici une forme générale d'anneau fendu, à section rectangulaire, en ayant deux extrémités faiblement distantes l'une de l'autre.

Ce jonc 24 est avantageusement fabriqué dans un matériau présentant une flexibilité appropriée pour permettre à un opérateur de le resserrer et de le déployer radialement de manière à l'engager entre les protubérances.

Dans l'exemple des figures l'organe de blocage est un jonc annulaire unique engagé dans la rainure délimitée par les faces de rétention. La liaison selon l'invention peut également être bloquée par plusieurs organes de blocage venant chacun se positionner entre plusieurs premières et deuxièmes faces de rétention.

Ces organes de blocage sont alors situés circonférentiellement les uns à la suite des autres dans la rainure délimitée par les faces de rétention, en étant maintenus par l'appui exercé par les faces de rétention et par effet centrifuge lorsque le moteur tourne. Ces organes de blocage peuvent se présenter sous forme de plusieurs portions de joncs complémentaires dont les extrémités sont jointives ou espacées les unes des autres lorsqu'ils sont en place.

Le fait d'utiliser un ou plusieurs organes de blocage formant globalement un jonc interne interposé axialement entre les protubérances assure que les disques conservent la possibilité de se centrer indépendamment l'un de l'autre sur l'axe AX, tout en garantissant qu'ils ne peuvent pas se désaccoupler.

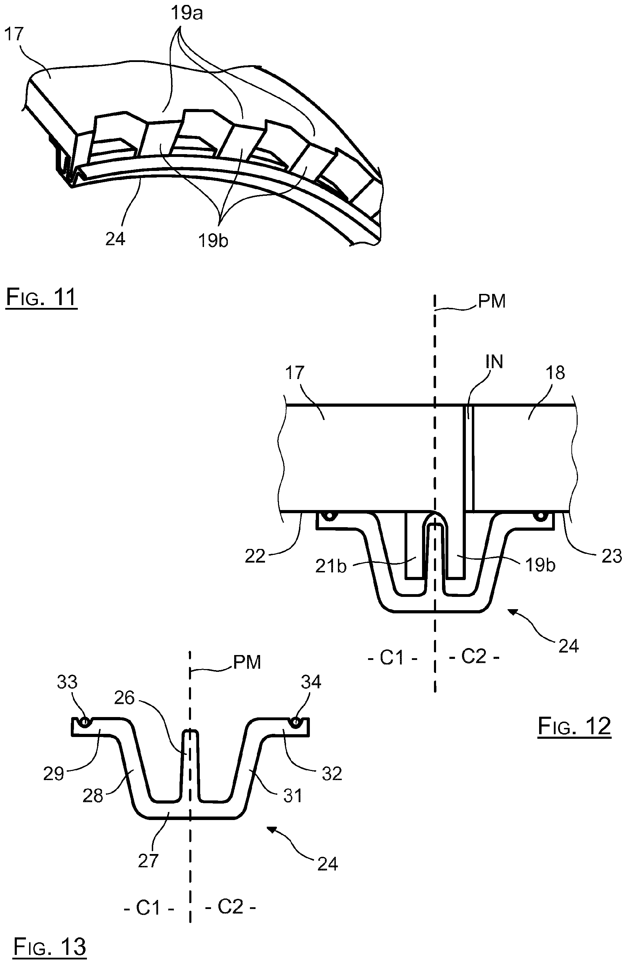

Dans une variante illustrée sur les figures 11 et 12, l'organe de blocage 24 présente une section non pas rectangulaire mais ayant une forme correspondant approximativement à celle de la lettre W, pour former un joint s'opposant au passage de fluide à travers les interstices présents entre les premières dents et les deuxièmes dents lorsqu'elles sont engagées les unes dans les autres. Un tel interstice apparaît sur la figure 12 où il est repéré par IN.

Comme visible sur la figure 12, la variante d'organe 24 comporte une nervure centrale en forme de couronne portée par un fond prolongé par deux flancs terminés chacun par un rebord ou rabat.

La nervure centrale 26 a une forme de couronne plane à section rectangulaire s'étendant dans le plan médian PM lorsque l'ensemble est monté, et elle dépasse radialement vers l'extérieur d'un fond 27 se présentant sous forme d'une paroi cylindrique en étant située à mi-longueur de ce fond 27, l'ensemble étant coaxial à l'axe AX.

Le fond 27 qui délimite la face interne de l'organe 24 s'étend pour moitié du premier côté C1, et pour moitié du deuxième côté C2. Ce fond 27 est prolongé du premier côté C1 par un premier flanc tronconique 28 qui est lui-même prolongé par un premier rebord cylindrique 29, ou rabat, venant en appui sur une première face interne cylindrique 22 du premier disque 17, dont partent les premières dents 19.

De manière analogue, ce fond 27 est prolongé du deuxième côté C2 par un deuxième flanc tronconique 31 qui est lui-même prolongé par un rebord cylindrique 32, ou rabat venant en appui sur une deuxième face interne cylindrique 23 du deuxième disque 18 dont partent les deuxièmes dents 21.

L'organe de blocage 24 de la variante des figures 11 à 13 a une forme de révolution autour de l'axe AX, et il est symétrique par rapport au plan PM lorsqu'observé en place, c'est-à-dire lorsqu'il est engagé dans la liaison pour la bloquer. Il présente lui aussi une forme générale d'anneau fendu présentant une flexibilité suffisante pour permettre son montage.

Le premier rebord cylindrique 29 comporte une face externe également cylindrique qui est pourvue d'une gorge dans laquelle est installé un premier joint torique 33. De manière analogue, le deuxième rebord cylindrique 32 comporte à sa face externe cylindrique une gorge dans laquelle est monté un deuxième joint torique 34.

Grâce à ces joints 33, 34, lorsque l'organe de blocage 24 est en place, il établit une continuité étanche de la face interne 22 du premier disque 17 jusqu'à la face interne 23 du deuxième disque 18, en recouvrant de façon étanche les dentures 19 et 21 engagées les unes dans les autres. Dans ces conditions, de l'air ne peut plus passer à travers les interstices IN situés en têtes des dents.

Le montage de cette variante d'organe 24 est analogue au montage de l'organe de blocage des figures 8 et 9 : une fois que les deux disques 17 et 18 ont été accolés, un opérateur saisit l'organe 24 en le resserrant sur lui-même pour réduire temporairement son diamètre externe. L'opérateur place alors cet organe 24 au niveau du plan PM, puis engage sa nervure centrale 26 entre les premières dents 19 et les deuxièmes dents 21, jusqu'à ce que les rebords 29 et 32 portant les joints 33 et 34 viennent en appui sur les faces internes 22 et 23 sur toute la circonférence de cet organe 24.

## Revendications

1. Accouplement pour turbomachine entre un premier élément (17) et un deuxième élément (18) qui s'étendent autour d'un axe (AX) en étant engagés l'un avec l'autre le long de l'axe (AX), chaque élément (17, 18) comprenant des dents (19, 21) qui s'étendent axialement pour être engagées axialement dans une concavité respective de l'autre élément, **caractérisé en ce qu'**il comporte au moins un organe de blocage (24) qui coopère avec des premiers moyens de blocage portés chacun par une dent (19) du premier élément (17) et avec des deuxièmes moyens de blocage portés chacun par une dent (21) du deuxième élément (18) pour bloquer axialement le premier élément (17) par rapport au deuxième élément (18).

2. Accouplement selon la revendication 1, dans lequel :
- plusieurs dents (19) du premier élément (17) comportent chacune une première face de rétention (19c);
- plusieurs dents (21) du deuxième élément (18) comportent chacune une deuxième face de rétention (21c);
- l'au moins un organe de blocage s'étendant entre les premières et les deuxièmes faces de rétention (19c, 21c) pour bloquer axialement le premier élément (17) par rapport au deuxième élément (18).

3. Accouplement selon la revendication 2, dans lequel les premières faces de rétention (19c) et les deuxièmes faces de rétention 21c) sont planes et en contact avec l'organe e blocage (24).

4. Accouplement selon la revendication 2 ou 3, dans lequel chaque face de rétention (19c, 21c) est formée par une protubérance (19b, 21b) prolongeant une dent (19, 21), et dans lequel chaque protubérance (19b, 21b) a une forme rectiligne d'orientation radiale dirigée vers l'axe (AX).

5. Accouplement selon la revendication 3 ou 4, dans lequel l'organe de blocage (24) est un anneau fendu.

6. Accouplement selon la revendication 3, dans lequel certaines des premières et deuxièmes dents (19, 21) sont dépourvues de protubérance.

7. Accouplement selon l'une des revendications 3 à 6, dans lequel l'organe de blocage (24) comprend un fond cylindrique (27) prolongé extérieurement par une nervure (26) s'engageant entre les premières et deuxièmes faces de rétention (19c, 21c).

8. Accouplement selon la revendication 7, dans lequel le fond cylindrique (27) de l'organe de blocage (24) est prolongé axialement par un premier et par un deuxième flanc (28, 31) qui sont axialement prolongés respectivement par un premier et par un deuxième rebord cylindrique (29, 32), ce premier et ce deuxième rebord cylindrique (29, 32) se plaquant respectivement contre une première et contre une deuxième face interne cylindrique (22, 23) respectivement du premier et du deuxième élément (17, 18).

9. Accouplement selon la revendication 8, dans lequel les rebords cylindriques (29, 32) portent chacun un joint d'étanchéité (33, 34) annulaire.

10. Turbine comprenant un accouplement selon l'une des revendications précédentes.

11. Turbomachine comprenant une turbine selon la revendication 10.

## Patentansprüche

1. Kupplung für Strömungsmaschine zwischen einem ersten Element (17) und einem zweiten Element (18), welche sich um eine Achse (AX) erstrecken, indem sie entlang der Achse (AX) miteinander in Eingriff stehen, wobei jedes Element (17, 18) Zähne (19, 21) aufweist, welche sich axial erstrecken, um axial in einer entsprechenden Vertiefung des anderen Elements in Eingriff zu kommen, **dadurch gekennzeichnet, dass** sie mindestens ein Verriegelungsglied (24) umfasst, das mit ersten Verriegelungsmitteln, welche jeweils von einem Zahn (19) des ersten Elements (17) gelagert werden, und mit zweiten Verriegelungsmitteln zusammenwirkt, welche jeweils von einem Zahn (21) des zweiten Elements (18) gelagert werden, um das erste Element (17) bezüglich des zweiten Elements (18) axial zu verriegeln.

2. Kupplung nach Anspruch 1, wobei:
- mehrere Zähne (19) des ersten Elements (17) jeweils eine erste Rückhaltefläche (19c) aufweisen;
- mehrere Zähne (21) des zweiten Elements (18) jeweils eine zweite Rückhaltefläche (21c) aufweisen;
- das mindestens eine Verriegelungsglied sich zwischen den ersten und den zweiten Rückhalteflächen (19c, 21c) erstreckt, um das erste Element (17) bezüglich des zweiten Elements (18) zu verriegeln.

3. Kupplung nach Anspruch 2, wobei die ersten Rückhalteflächen (19c) und die zweiten Rückhalteflächen (21c) eben sind und mit dem Verriegelungsglied (24) in Kontakt stehen.

4. Kupplung nach Anspruch 2 oder 3, wobei jede Rückhaltefläche (19c, 21c) durch einen einen Zahn (19, 21) verlängernden Vorsprung (19b, 21b) gebildet wird, und wobei jeder Vorsprung (19b, 21b) eine geradlinige Form mit radialer Ausrichtung zu der Achse (AX) hin ausgerichtet aufweist.

5. Kupplung nach Anspruch 3 oder 4, wobei das Verriegelungsglied (24) ein Spaltring ist.

6. Kupplung nach Anspruch 3, wobei einige der ersten und zweiten Zähne (19, 21) mit einem Vorsprung versehen sind.

7. Kupplung nach einem der Ansprüche 3 bis 6, wobei das Verriegelungsglied (24) einen zylinderförmigen Boden (27) aufweist, der außen durch einen Steg (26) verlängert ist, welcher zwischen den ersten und zweiten Rückhalteflächen (19c, 21c) eingreift.

8. Kupplung nach Anspruch 7, wobei der zylinderförmige Boden (27) des Verriegelungsglieds (24) axial durch eine erste und eine zweite Seitenwand (28, 31) verlängert ist, welche jeweils axial durch einen ersten und einen zweiten zylinderförmigen Flansch (29, 32) verlängert sind, wobei sich der erste und der zweite zylinderförmige Flansch (29, 32) jeweils gegen eine erste und gegen eine zweite zylinderförmige Innenfläche (22, 23) des ersten bzw. des zweiten Elements (17, 18) pressen.

9. Kupplung nach Anspruch 8, wobei die zylinderförmigen Flansche (29, 32) jeweils eine ringförmige Dichtung (33, 34) tragen.

10. Turbine mit einer Kupplung nach einem der vorhergehenden Ansprüche.

11. Strömungsmaschine mit einer Turbine nach Anspruch 10.

## Claims

1. Coupling for turbomachine between a first element (17) and a second element (18) which extends around an axis (AX) while being engaged with each other along the axis (AX), each element (17, 18) including teeth (19, 21) which extend axially to be engaged axially in a respective concavity of the other element, **characterised in that** it comprises at least one blocking member (24) which cooperates with first blocking means borne each by a tooth (19) of the first element (17) and with second blocking means borne each by a tooth (21) of the second element (18) to block axially the first element (17) with respect to the second element (18).

2. Coupling according to claim 1, in which:
- several teeth (19) of the first element (17) each comprise a first retention face (19c);
- several teeth (21) of the second element (18) each comprise a second retention face (21c);
- the at least one blocking member extending between the first and the second retention faces (19c, 21c) to block axially the first element (17) with respect to the second element (18).

3. Coupling according to claim 2, in which the first retention faces (19c) and the second retention faces (21c) are flat and in contact with the blocking member (24).

4. Coupling according to claim 2, in which each retention face (19c, 21c) is formed by a protuberance (19b, 21b) prolonging a tooth (19, 21), and in which each protuberance (19b, 21b) has a rectilinear shape of radial orientation directed towards the axis (AX).

5. Coupling according to claim 3, in which the blocking member (24) is a split ring.

6. Coupling according to claim 3, in which certain of the first and second teeth (19, 21) are devoid of protuberance.

7. Coupling according to claim 3, in which the blocking member (24) includes a cylindrical bottom (27) prolonged externally by a rib (26) engaging between the first and second retention faces (19c, 21c).

8. Coupling according to claim 7, in which the cylindrical bottom (27) of the blocking member (24) is prolonged axially by a first and by a second side (28, 31) which are axially prolonged respectively by a first and by a second cylindrical edge (29, 32), this first and this second cylindrical edge (29, 32) pressing respectively against a first and against a second cylindrical inner face (22, 23) respectively of the first and the second elements (17, 18).

9. Coupling according to claim 8, in which the cylindrical edges (29, 32) each bear an annular leak tight seal (33, 34).

10. Turbine including a coupling according to claim 1.

11. Turbomachine including a turbine according to claim 10.
